# EUROPEAN PATENT APPLICATION

(11) **EP 4 509 194 A1**
(43) Date of publication of application: **19.02.2025**
(21) Application number: 24192937.1
(22) Date of filing: 05.08.2024
(51) Int. Cl.: A63F 13/216, A63F 13/63, A63F 13/79

(54) **DYNAMIC GENERATION OF CUSTOMIZED ELECTRONIC GAMES SYSTEMS AND METHODS**

(30) Priority: 11.08.2023 US 202363518979 P; 26.04.2024 US 202463639289 P; 31.07.2024 US 202418790918
(71) Applicant: Entain Marketing (UK) Ltd., London Greater London EC4M 9AF (GB)
(72) Inventor: MELLONI, Alfredo, Rome (IT)
(74) Representative: Reddie & Grose LLP

(57) **Abstract**

Systems and methods for generating customized electronic games are disclosed. Indications of game types are displayed in a user interface for generating an electronic game, each game type corresponding to a set of game rules. A selection of a game type is received. Indications of game themes are displayed in the user interface, each game theme corresponding to a conceptual game feature. A selection of a game theme is received. Graphic elements are generated based on the selected game type and the selected game theme. The graphic elements are associated with a graphic style based on a user attribute. And the electronic game is generated and provided using the graphic elements and the set of game rules.

## Description

### CROSS-REFERENCE TO RELATED APPLICATIONS

This application claims benefit and priority of the Applicant's U.S. Provisional Patent Application No. 63/518,979, filed August 11, 2023 and titled "DYNAMIC GENERATION OF CUSTOMIZED ELECTRONIC GAMES SYSTEMS AND METHODS," the Applicant's U.S. Provisional Patent Application No. 63/639,289, filed April 26, 2024 and titled "DYNAMIC GENERATION OF CUSTOMIZED ELECTRONIC GAMES SYSTEMS AND METHODS," and the Applicant's U.S. Provisional Patent Application No. 18/790,918, filed July 31, 2024 all of which are incorporated herein by reference in their entireties and for all purposes.

### FIELD

The described embodiments relate generally to systems and methods for dynamically generating customized electronic games.

### BACKGROUND

Electronic games (e.g., video games, online games, digital games) can be provided or accessible to users via various computing devices, such as by providing the games to user devices via a network (e.g., the Internet), providing the games via a gaming console or other computing device (e.g., on a disk or cartridge, for download to a memory, and/or via the cloud), and/or providing the games via a gaming device (e.g., a slot machine or the like, or an arcade video game). Some versions of electronic games can facilitate wagers and/or determine the results of wagers, and/or electronic games can be non-wagering games, such as recreational or amusement games (e.g., video games).

Electronic games can include underlying gaming logic, gameplay, and/or other rules or interactions (collectively, "game rules"), such as one or more patterns defined by rules, connections or interactions between a user and a game, challenges included in a game, plots, themes, and so forth. Game rules can comprise software code for controlling the electronic game. Electronic games can include probabilities of success, which specify or estimate the likelihood of a successful result of one or more interactions in the electronic game, such as a likelihood that a user's wager will result in a win. In some examples, the probabilities of success can be included in the game rules.

Currently, electronic games are not customizable to different user preferences, jurisdictional requirements (e.g., regulations and the like), or otherwise sufficiently dynamic to enable rapid changes. As such, electronic games are not readily changeable or modifiable, which can decrease user engagement, as well as reduce adaptability and run time functionality. As such, there is a need for electronic games, including software and memory for enabling the same, that allow rapid customization, dynamic and fast rendering and adaptability.

### SUMMARY

The following Summary is for illustrative purposes only and does not limit the scope of the technology disclosed in this document.

The invention is defined in the independent claims. Optional features are set out in the dependent claims.

In an embodiment, a computer-implemented method of generating a customized electronic game is disclosed. Indications of a plurality of game types are displayed via a user interface displayed on a user device associated with a user, each game type of the plurality of game types corresponding to a set of game rules, the user interface being configured to generate an electronic game. A selection of a game type of the plurality of game types for the electronic game is received via the user interface. Indications of a plurality of game themes are displayed via the user interface, each game theme of the plurality of game themes corresponding to a conceptual game feature. A selection of a game theme of the plurality of game themes for the electronic game is received via the user interface. Graphic elements for the electronic game are generated based on the selected game type and the selected game theme, the graphic elements being associated with a graphic style based on at least one user attribute of the user. The electronic game is generated using the generated graphic elements and the set of game rules corresponding to the selected game type, and the electronic game is provided to the user device.

Optionally, the at least one user attribute comprises selection of the graphic style. In these and other implementations, indications are displayed via the user interface of a plurality of graphic styles, the indications of the graphic styles each comprising a representative stylistic image illustrating a corresponding graphic style, the plurality of graphic styles including the selected graphic style. The representative stylistic image is not included in the generated graphic elements. A selection is received via the user interface of the selected graphic style.

Optionally, the at least one user attribute is determined based on a user profile of the user.

Optionally, the plurality of game types or the plurality of game themes is selected for display based on the at least one user attribute.

Optionally, the graphic elements are generated using an artificial intelligence model.

Optionally, at least one of the electronic game or the graphic elements are generated in real time.

Optionally, the user device comprises an electronic slot machine.

Optionally, the generated graphic elements are displayed, and a selection of at least some of the generated graphic elements is received, the generated electronic game including the at least some of the generated graphic elements.

Optionally, a quantity of the graphic elements is determined based on the set of game rules.

Optionally, generating the graphic elements includes retrieving stored images from an image catalog for inclusion in the graphic elements.

Optionally, a selection of an audio element for the electronic game is received, and the generated electronic game includes the selected audio element.

Optionally, at least one game rule in the set of game rules is modified responsive to a user input or based on the at least one user attribute.

Optionally, a representative electronic game is concurrently displayed while the electronic game is being generated.

Optionally, the generated graphic elements comprise a set of symbols for a slot machine-type game.

Optionally, generating the electronic game includes generating a textual element or a plot element for the electronic game.

Optionally, the set of game rules is associated with a stacked wild, wild, or scatter style of game play.

Optionally, the set of game rules is associated with a volatility, wherein the volatility includes a frequency of winning results, a magnitude of winning results, or both.

Optionally, the set of game rules includes game rules associated with a type of bonus play.

Optionally, the set of symbols includes one or more of letter symbols, graphic symbols, or bonus symbols.

In another embodiment, a method of generating an electronic game is disclosed. A weighted score is computed associated with a plurality of game elements in a catalog, the weighted score based on metadata tags associated with the plurality of game elements and one or more user attributes. A subset of the plurality of game elements is selected based on the weighted score, and the subset of the plurality of game elements is retrieved from the catalog. The retrieved subset of the plurality of game elements is rendered for inclusion in an electronic game based at least in part on the weighted score. The electronic game is generated using the rendered subset of the plurality of game elements. In various embodiments, hardware capabilities of a user device are determined, and the subset of the plurality of game elements is rendered based at least in part on the determined hardware capabilities. In various embodiments, the one or more user attributes include a location of a user or a user device.

In another embodiment, a system is disclosed including one or more processors and one or more memories carrying instructions configured to cause the one or more processors to perform the foregoing methods.

In yet another embodiment, a computer-readable medium is disclosed carrying instructions configured to cause one or more computing systems or one or more processors to perform the foregoing methods.

### BRIEF DESCRIPTION OF THE DRAWINGS

FIG. 1 is block diagram illustrating an environment in which an electronic game generation system operates, in some implementations.
FIG. 2 is a block diagram illustrating a computing device implementing an electronic game generation system, in some implementations.
FIG. 3A is a display diagram illustrating an interface provided by an electronic game generation system, in some implementations.
FIG. 3B is a display diagram illustrating an interface provided by an electronic game generation system, in some implementations.
FIG. 3C is a display diagram illustrating an interface provided by an electronic game generation system, in some implementations.
FIG. 4 is a display diagram illustrating an electronic game generated using an electronic game generation system, in some implementations.
FIG. 5 is a flow diagram illustrating a process performed using an electronic game generation system, in some implementations.
FIG. 6 is a display diagram illustrating an interface provided by an electronic game generation system, in some implementations.
FIG. 7 is a display diagram illustrating an interface provided by an electronic game generation system, in some implementations.
FIG. 8 is a display diagram illustrating an interface provided by an electronic game generation system, in some implementations.
FIG. 9 is a display diagram illustrating an interface provided by an electronic game generation system, in some implementations.
FIG. 10 is a display diagram illustrating an interface provided by an electronic game generation system, in some implementations.
FIG. 11 is a display diagram illustrating an interface provided by an electronic game generation system, in some implementations.
FIG. 12 is a display diagram illustrating an interface provided by an electronic game generation system, in some implementations.
FIG. 13 is a display diagram illustrating an interface provided by an electronic game generation system, in some implementations.

### DETAILED DESCRIPTION

Electronic games, such as video games, online wager games, or the like, are typically hosted on a computing device, such as loaded from memory or received from an online memory storage or server. Such electronic games are loaded and receive input from a user, such as to receive user selections or inputs, and then game play occurs based on the user inputs and features of the game. Electronic games typically include various content items, elements, and/or features, such as images or other graphic features, audio features, themes, plots, gameplay, game rules, probabilities of success, topics, subject matters, concepts, characters, avatars, and so forth. For example, an electronic game typically includes a set of graphic elements, which can include ornamental designs, title and/or name elements, symbols, characters, and so forth.

Graphic elements can include still images, icons, videos, or combinations thereof. For example, an electronic game using slot machine-like (e.g. wagering or betting games) game rules can include a set of symbols, arrangements of which are associated with various results, such as matching symbols (e.g., three symbols, four symbols, five symbols, etc.) associated with a winning result or mismatching symbols associated with a losing result, and are displayed based on probabilities of success for the game. Other examples include arrangements of symbols in a matrix or grid associated with results, arrangements of symbols associated with bonuses or additional rounds or levels, and so forth. An electronic game may use a preset number of symbols (e.g., 7 to 15 symbols) that can be combined in various ways to indicate various results (e.g., electronic slot machines where alignment or certain patterns of graphics indicate a win or loss). Graphic elements and/or other content items of an electronic game can be selected based on various themes and/or styles, such as artistic styles, subject matters, topics, colors, brands, or the like. Other examples of graphic elements include a title sequence, a character or avatar, a visual environment in which a character or avatar operates, one or more displayed screens or sequences of an electronic game, and so forth.

Developers, users, and/or providers of electronic games face difficult technical challenges related to identifying, generating, and/or selecting graphic elements and other content items or elements for inclusion in an electronic game. For example, existing systems typically provide only static and/or predetermined graphic elements and other content items, i.e., the icons are predetermined and applicable to every user. Although some existing systems allow limited options for a user to configure only certain content items, these systems are typically only for applying certain predetermined content items, such as simplistic "skins" or configurable characters or avatars. Additionally, configuring the graphic elements of an electronic game can be costly and time consuming, often taking months or years to complete. Moreover, existing systems typically require content items of an electronic game to be manually configured, such as by software developers, graphic designers, audio engineers, visual and/or voice artists, or the like. As a result, users of electronic games are typically limited to selecting an electronic game from a set of predetermined electronic games, which does not allow users to generate their own customized electronic games.

These and other shortcomings of existing systems may cause user dissatisfaction, decreased user engagement, and similar problems, e.g., due to technical problems of existing systems, such as limitations of existing systems for generating and/or providing electronic games using manually-generated software code and/or manually-generated graphic elements and other content items. Even if limited elements of an electronic game were to include features that could be generated automatically (e.g., artificially intelligent (Al)-generated software code or images), existing systems nonetheless require manual configuration of the limited elements into the electronic game.

Accordingly, there is a need for technical solutions to overcome the foregoing technical problems and to provide other benefits. For example, there is a need for technologies that can quickly and efficiently generate various content items for electronic games, such as graphic elements and game play elements for electronic games. There is further a need for technologies that can generate electronic games based on user attributes and/or characteristics, such as games generated on demand and/or games that are customized or personalized to a user, especially where such technologies do not require manual review and creation of thematic elements, settings, game rules, probabilities of success, or the like, allowing computer systems to quickly and efficiently generate unique elements for a game. Finally, there is a need for technologies that can rapidly generate customizable games with unique game play functionality that can be deployed quickly and that require reduced processing time to generate and display.

Disclosed herein are systems and related methods for dynamically generating customized electronic games ("system" or "electronic game generation system"). The system can generate customized electronic games based on various user attributes (e.g., user profiles, user characteristics, user inputs), such as user inputs specifying characteristics of graphic elements to be included in an electronic game. The system is able to render or otherwise generate a new, unique, or otherwise modified game quickly, such as in minutes or seconds. The generated game is customized based on the user attributes, and the generated game can therefore be specific to a user (e.g., an individual player or a business user of the system). Conventional platforms cannot render unique and new game play and graphics as quickly as enabled by the disclosed system. This allows rapid changes to account for user preferences and desires, as well as to adopt for different jurisdictional requirements (e.g., in different locations), hardware requirements, or the like.

In various embodiments, the system generates customized electronic games based in part on a location, such as a user or device location. For example, the system determines a user or device location based on a user input, an IP address, geolocation data, or other data, and the system recommends or retrieves game elements based on the location. In various embodiments, game rules are personalized to a location, such as to generate a game that is compliant with regulations of a local jurisdiction. In various embodiments, game elements are personalized to include a theme or style based on a location, such as to generate an electronic game having content related to a city, a country, or another location. Other examples may include generating text in a local language based on a detected location.

In some implementations, the system includes one or more user interfaces that receive user input to assist in configuring customized electronic games. The system displays indications of game types in a user interface for generating an electronic game, each game type corresponding to a set of game rules, and the system receives a selection of a game type. Game rules can relate to, for example, gameplay, interactions and/or challenges included in a game, results of a game, levels and/or rounds of a game, and so forth. The system displays indications of game themes in the user interface, each game theme corresponding to a conceptual game feature, and the system receives a selection of a game theme. Examples of themes and/or conceptual game features include topics, subject matters, concepts, and/or ideas included in or related to an electronic game. The system generates graphic elements based on the selected game type and the selected game theme. The graphic elements can include, for example, symbols, characters, avatars, backgrounds, titles, colors, or the like. Graphic elements can comprise still images, videos, or combinations thereof. The graphic elements are associated with a graphic style based on a user attribute. As used herein, a graphic style can refer to a subjective and/or aesthetic characteristic or attribute of a graphic element, such as an artistic style. For example, a graphic style can comprise or relate to a particular artist, an artistic movement, an artistic or graphic technique or medium, a color palette, or any other attribute or characteristic of graphic elements. The system generates and provides the electronic game using the graphic elements and the set of game rules.

In some implementations, the system may additionally or alternatively identify, select, and/or generate other content items for inclusion in the generated electronic game, such as audio elements, narrative elements, and so forth.

In some implementations, the system generates the electronic game based on other user attributes (e.g., user inputs, user history, user profile characteristics, etc.), such as user inputs specifying one or more game rules, and/or user inputs specifying or describing one or more audio elements, titles, names, stories, and/or other game elements. In various embodiments, game elements are retrieved from storage (e.g., a memory, a database, a catalog) and configured by the system for inclusion in a generated electronic game, and the configured game elements are stored (e.g., locally) as a specific implementation of an electronic game. For example, various graphic elements may be stored in a catalog of game elements, and specific graphic elements may be identified, retrieved, and specifically configured for inclusion in a user-specific electronic game based on various user attributes, such as user preferences, user location, hardware capabilities of a user device, and so forth.

In some implementations, the system generates the electronic game using customized and/or configurable game rules and/or probabilities of success, which can be based on user attributes and/or user inputs. For example, game rules and/or probabilities of success can be generated and/or weights thereof can be adjusted for a game based on user attributes. The electronic game can adjust and/or determine these game rules and/or probabilities of success, for example, to increase the likelihood of a successful result or wager for a VIP user, in exchange for payment, and/or based on user interactions (e.g., to make it more likely that a user will win if they play for a longer time).

In some implementations, at least a portion of the system can be provided using augmented reality (AR), virtual reality (VR), and/or in the metaverse. For example, a generated electronic game can provide for gameplay using AR, VR, and/or the metaverse, and/or a user can interact with the system using AR, VR, and/or the metaverse to generate an electronic game. In these and other implementations, the system can be provided using one or more wearable devices, such as a VR headset. In various embodiments, the system generates an electronic game based on hardware capabilities of AR/VR hardware, as described herein.

Generation of elements for an electronic game can be performed using various algorithms that may include weighted elements based on user attributes, such as user preferences or inputs. For example, values for weights or scores can be calculated to determine whether an electronic game should be a game of chance or a game of skill, to determine a difficulty level or probability of success, to determine content items or thematic elements, and so forth. Additionally or alternatively, one or more machine learning (ML) and/or artificial intelligence (Al) models can be used, as described herein. In some examples, weighted scores are calculated based on metadata associated with game elements, as described herein, and content items can be selected from the game elements based on the weighted scores.

In various embodiments, the system can be accessed via a user's computing device, such as a smartphone, tablet, laptop, personal computer, or the like. In various embodiment, the system can be accessed via a gaming device, such as a slot machine and/or other electronic gaming device. In various embodiments, the system can be used to generate customized gaming items, such as for printing cards for bingo-type games, keno-type games, scratch tickets, lottery games, pull tabs, or the like. In these and other embodiments, the system automatically configures or renders game elements based on specific hardware capabilities or features of a device used to generate or implement an electronic game, such as by formatting game elements according to display characteristics, audio characteristics, or the like. As another example, the generated graphics may be based on the graphical processing configurations, e.g., more sophisticated graphics will be rendered for devices having more sophisticated hardware, such as higher resolution or the like.

Advantages of the disclosed technology include, without limitation, facilitating the creation of new and/or customized electronic games in real time (e.g., seconds or minutes). For example, a user can use the system to generate an electronic game in real time based preferences or other attributes of the user, such as desired themes, styles, gameplay, graphic elements, audio elements, stories, plots, game rules, probabilities of success, and so forth. The user can be, for example, an end user of a generated game or a provider of electronic games. Rather than manually configuring a new electronic game, the system can generate an electronic game using simplified user inputs, such as selections received via a user interface (e.g., selections of buttons or icons, character strings, subjective descriptions) and/or determined user attributes (e.g., attributes stored in and/or determined using a user profile). Moreover, the disclosed technology allows fast generation and rendering of unique or specialized electronic games as the disclosed technology generates customized game elements quickly (e.g., in seconds) and dynamically. For example, game elements are generated using simple user interface interactions and without manually configuring or generating game elements. Additionally, the disclosed technology can generate or render game elements based on hardware capabilities of a device, e.g., devices with faster processors can utilize more complicated game play rules and/or graphics.

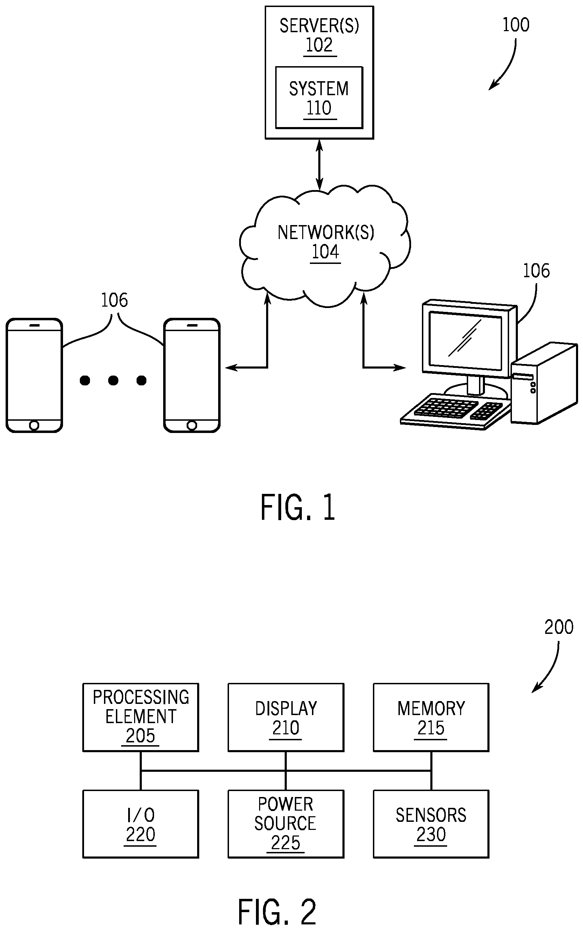

FIG. 1 is block diagram illustrating an environment 100 in which an electronic game generation system 110 operates, in some implementations. The environment 100 includes one or more user devices 106 associated with users of electronic games. User devices 106 can be any computing device and/or gaming device capable of accessing or providing electronic games such as mobile devices, tablets, smartphones, connected and/or smart devices, wearable devices, AR and/or VR devices, personal and/or desktop computers, set-top boxes, Internet of things (IoT) devices, gaming consoles, slot machines, electronic card game machines, electronic bingo machines, arcade games, and so forth.

The environment 100 also includes one or more server(s) 102, which can comprise one or more cloud servers or other cloud computing resources, application servers, database servers, web servers, game servers, and so forth. The server(s) 102 can comprise, for example, one or more cloud servers of a provider of electronic games, which can be used to store and/or provide electronic games of the provider and/or to host the system 110. The system 110 can be used to generate electronic games, as described herein. For example, users provide various inputs related to desired characteristics of electronic games via the user devices 106, and the system 110 generates electronic games based on the received inputs. The server(s) 102 can also store user data, such as user profiles associated with users of the one or more user devices 106. The stored user data can be used to generate content items for an electronic game, such as graphic elements or other content items based on user preferences, user history, user demographic information, and so forth. The server(s) 102 can include one or more game servers configured to provide and/or generate electronic games. A game server can store and/or provide various aspects of the system 110, such as game rules, probabilities of success, content items, generated electronic games, and so forth.

In some implementations, the servers(s) 102 include one or more content servers storing a catalog of content for potential inclusion in a game. The catalog can include a large amount of content items (e.g., thousands or hundreds of thousands of items), such as graphic elements, audio elements, game rules, and so forth. Additionally, the catalog can include metadata associated with the content items, such as a set of tags indicating one or more characteristics of the content items and/or user attributes associated with the content items (e.g., themes, graphic styles, colors, etc.). The metadata can be used to identify content items for inclusion in an electronic game based on user attributes, such as using a matching score and/or using an AI or ML model. The catalog stored on the content servers can comprise a file system and/or can be accessed using a database of the system 110. For example, the metadata can be used to compute weighted scores, as described herein, to indicate a likelihood that a respective content item matches a desired feature of an electronic game, such as a theme, a style, a game type, a user characteristic or preference, or the like. In various embodiments, numerical scores can be generated for themes, game types, graphic styles, audio styles, and so forth, and these numerical scores can be combined to determine a weighted score for each content item. A predetermined number of content items (e.g., in respective categories) can be selected based on highest weighted scores, and the selected content items can be retrieved and stored for inclusion in a generated electronic game. The selected content items can be further processed and rendered for inclusion in the generated electronic game, such as by formatting the content items for a selected game type, configuring the content items to be output via a specific user device, and so forth.

The user devices 106 and/or the server(s) 102 can communicate via one or more networks 104 included in the environment 100. The one or more networks 104 can include any wired and/or wireless networks and any public or private networks, including but not limited to the Internet, one or more intranets, local area networks (LANs), wide area networks (WANs), telecommunications networks, and so forth. In some implementations, the networks 104 include the Internet, which is used by the user devices 106 to access the server(s) 102 (e.g., to access electronic games from the server(s) 102 and/or the access the system 110). In an example implementation, a user device 106 comprising a user gaming device accesses a gaming server of the server(s) 102 via the one or more networks 104 to generate and/or access an electronic game.

At least a portion of the electronic game generation system 110 can reside, for example, on the server(s) 102. For example, the server(s) 102 can store and/or provide one or more software applications, databases, and/or other components of the system 110 to perform methods described herein (e.g., to generate or retrieve graphic elements and/or electronic games). For example, the server(s) 102 can store a catalog of content items that can be retrieved and processed for inclusion in a generated electronic game, and the server(s) 102 can store various metadata and associated metadata tags for the content items. The content items can include game rules associated with game types. Additionally, the server(s) 102 can store user profiles containing various user data, such as user identifiers, existing games associated with a user, user history (e.g., engagement with existing games or game types), user financial information, user demographic information, and so forth. In some implementations, the entire electronic game generation system 110 can reside on the server(s) 102. Additionally, or alternatively, at least a portion of the electronic game generation system 110 can reside on the user devices 106.

FIG. 2 is a block diagram illustrating a computing device 200 implementing an electronic game generation system (e.g., system 110), in some implementations. For example, the computing devices 200 can be the server(s) 102 and/or the user device(s) 106 of FIG. 1. The computing device 200 can be used to provide and/or access at least a portion of the system 110 of FIG. 1. The computing device 200 can be associated with a user of the system 110, such as an end user of an electronic game generated using the system 110 and/or a provider of electronic games generated using the system 110.

The computing device 200 includes one or more processing elements 205, displays 210, memory 215, an input/output interface 220, power sources 225, and/or one or more sensors 230, each of which may be in communication either directly or indirectly. These and other components of the computing device 200 can be implemented using hardware associated with hardware capabilities, which can be identified by the system and used to configure elements of a generated electronic game.

The processing element 205 can be any type of electronic device and/or processor capable of processing, receiving, and/or transmitting instructions. For example, the processing element 205 can be a microprocessor or microcontroller. Additionally, it should be noted that select components of the system may be controlled by a first processor and other components may be controlled by a second processor, where the first and second processors may or may not be in communication with each other. The device 200 may use one or more processing elements 205 and/or may utilize processing elements included in other components. For example, a first device 200 can be a user device 106, while a second device 200 can be a server 102, and the first device 200 can use a processing element 205 of the second device 200.

The display 210 provides visual output to a user and optionally may receive user input (e.g., through a touch screen interface). The display 210 may be substantially any type of electronic display, including a liquid crystal display, organic liquid crystal display, and so on. The type and arrangement of the display depends on the desired visual information to be transmitted (e.g., can be incorporated into a wearable item such as glasses, or may be a television or large display, or a screen on a mobile device). The display 210 is associated with dimensions, resolutions, and other hardware capabilities, which the system can use to configure game elements for rendering on a specific device 200.

The memory 215 stores data used by the device 200 to store instructions for the processing element 205, as well as store data for the electronic game generation system, such as user data and/or game data. The memory 215 may be, for example, magneto-optical storage, read only memory, random access memory, erasable programmable memory, flash memory, or a combination of one or more types of memory components. The memory 215 can include, for example, one or more non-transitory computer-readable media carrying instructions configured to cause the processing element 205 and/or the device 200 or other components of the system to perform operations described herein.

The I/O interface 220 provides communication to and from the various devices within the device 200 and components of the computing resources to one another. The I/O interface 220 can include one or more input buttons, a communication interface, such as WiFi, Ethernet, or the like, as well as other communication components, such as universal serial bus (USB) cables, or the like. In some implementations, the I/O interface 220 can be configured to receive voice inputs and/or gesture inputs. The I/O interface 220 may include specific hardware for receiving inputs and/or providing outputs, which the system can use to configure game elements specific to a device 200. For example, an electronic game may be generated differently depending on whether a device can receive touchscreen inputs, gesture inputs, handheld controller inputs, voice inputs, and so forth.

The power source 225 provides power to the various computing resources and/or devices. The electronic game generation system may include one or more power sources, and the types of power source may vary depending on the component receiving power. The power source 225 may include one or more batteries, wall outlet, cable cords (e.g., USB cord), or the like.

The sensors 230 may include sensors incorporated into the electronic game generation system. The sensors 230 are used to provide input to the computing resources that can be used to generate electronic games and/or graphic elements. For example, the sensors 230 can include a camera or other image capture device for capturing images used in graphic elements, and/or the sensors 230 can be used to receive user inputs, such as indications of user attributes. In various embodiments, sensors 230 can include a camera that captures an image of a user, and the system uses the user image to generate a character or avatar simulating the appearance of the user that is included in a generated electronic game, such as by detecting a shape, color, or orientation of user facial features. In various embodiments, sensors 230 can implement gaze detection, computer vision, or biometric features to determine or estimate user attentiveness, mood, sentiment, engagement, or the like. For example, the system can determine that a user reacted positively to a particular game element by detecting the user's gaze and sentiment associated with the particular game element, and the system can take the user's positive reaction into account when scoring the particular game element. In other examples, one or more cameras may detect various features in a physical environment where a device is located, and game elements can be generated based on the physical environment, such as by matching colors or textures in a game to a surrounding environment.

Components of the device 200 are illustrated only as examples, and illustrated components can be removed from and/or added to the device 200 without deviating from the teachings of the present disclosure.

In various embodiments, the system generates electronic games based at least in part on functionality or attributes of user hardware, such as one or more components of the device 200 used to implement the system. For example, the system generates graphic elements or other game content specifically configured to be rendered by one or more hardware components of a device, such as the processing element 205 or the display 210. In an embodiment, the system determines a characteristic of a hardware component of the device 200 and retrieves or generates a game element based on the determination of the characteristic. For example, the game element may include a graphic element specifically generated based on a resolution of the display 210 or processing capabilities of the processing element 205. Advantageously, the system generates electronic games specifically suited to hardware capabilities, which may improve rendering time and other performance characteristics, and the system may generate electronic games that do not exceed hardware capabilities of the device 200. For example, the system may determine graphics processing capabilities of the processing element 205 and generate graphic elements for an electronic game that can be rendered within a threshold amount of time using the determined graphics processing capabilities. In another example, the system may determine that the device 200 lacks audio capabilities, and the system may generate an electronic game specific to the device 200 by omitting audio elements. In another example, the system may determine that the device 200 includes multiple displays 210, and the system may generate an electronic game having graphic elements configured for display on the multiple displays 210. In another example, the system may determine that the device 200 includes AR or VR capabilities, and the system configures game elements according to the AR/VR capabilities, such as to receive inputs and generate outputs via a VR headset, using smart glasses, using a 3D display, or the like. It will be appreciated that other hardware functionality or attributes of the device 200 can be used to generate elements of an electronic game.

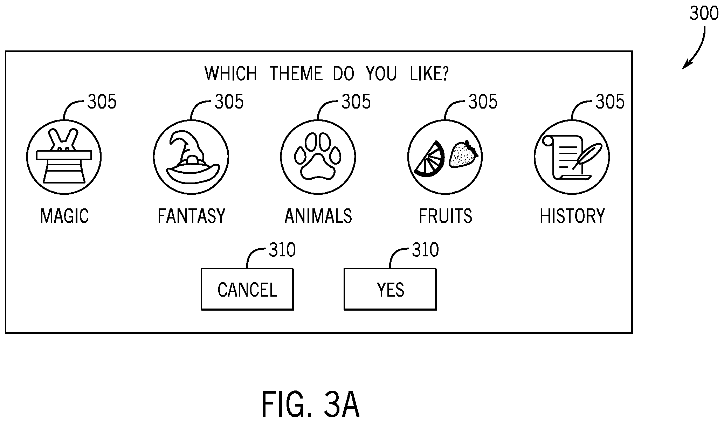

FIG. 3A is a display diagram illustrating an interface 300 provided by an electronic game generation system (e.g., system 110), in some implementations. For example, a user may access the system 110 using a user device (e.g., user device 106 and/or device 200) to generate a new and/or customized electronic game, such as via a website and/or a software application provided by the system 110. Upon accessing the system 110, the user is prompted to provide various inputs to specify desired characteristics of the electronic game, such as characteristics of graphic elements or other content items for a desired electronic game.

In the example of FIG. 3A, the user interface 300 displays a question "Which theme do you like?" And the user interface 300 displays a plurality of indications 305 of game themes. The indications 305 can comprise text and/or images (e.g., thumbnails, clips, or icons) representative of various game themes. The game themes can relate to, for example, topics, subject matters, concepts and/or conceptual elements of an electronic game. In the depicted example, the game themes comprise magic, fantasy, animals, fruits, and history. The indications 305 can be actionable, such as to allow a user to click or touch the indications to select a corresponding game theme. The interface 300 can include one or more buttons or icons 310 to allow a user to confirm or submit the user's selection of a game theme.

In various embodiments, the system selects the plurality of indications 305 for display based on one or more user attributes, such as user data in a user profile, user location, history of user interactions, or the like. For example, the system can select the plurality of indications 305 based on themes of existing games frequently played by the user, or the system can select the plurality of indications 305 based on a current location of the user (e.g., based on device geolocation information, IP address, or a user input).

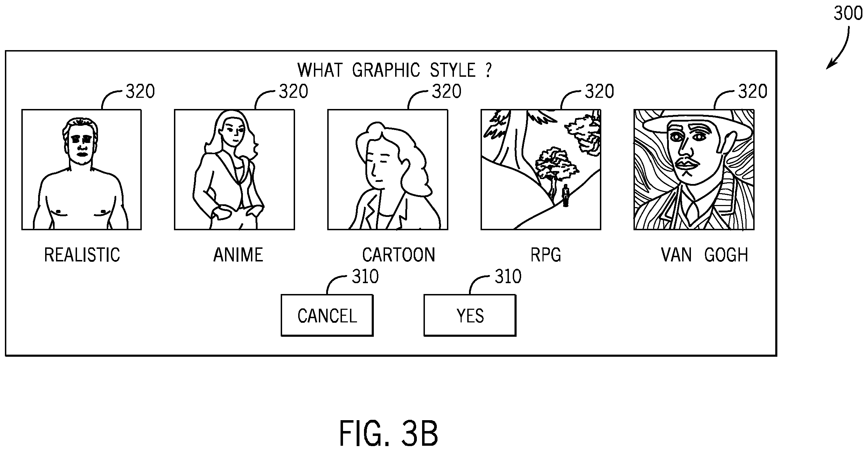

FIG. 3B is a display diagram illustrating the interface 300 provided by the electronic game generation system (e.g., system 110), in some implementations. For example, after selecting a theme via the user interface 300, as illustrated in FIG. 3A, the interface 300 displays a prompt for the user to select a graphic style. The user interface 300 displays a plurality of indications 320 of graphic styles. The indications 320 comprise text and/or images illustrating or representing each graphic style. For example, the indications 320 can be representative stylistic images of a graphic style. A representative stylistic image can be a sample, example, or illustrative image to demonstrate to a user the kind of graphic elements that will be generated according to each graphic style, but the representative stylistic image may not be included in graphic elements that are selected subsequent to selection of a graphic style corresponding to a selected representative stylistic image. One or more buttons or icons 310 allow a user to submit or confirm a selection of a graphic style.

In various embodiments, the system selects the plurality of indications 320 for display based on one or more user attributes, such as user data in a user profile, user location, history of user interactions, or the like, similar to the selection of the plurality of indications 305 of FIG. 3A.

After selection of a game theme, a graphic style, and/or or other game elements (e.g., a game type) via the interface 300, the system generates or retrieves graphic elements and/or other content items (e.g., audio elements) for inclusion or potential inclusion in a generated electronic game based on the received selections and/or based on other user attributes (e.g., a user profile). For example, the graphic elements and/or other content items can be retrieved from a catalog provided by the system and/or generated using an AI or ML model.

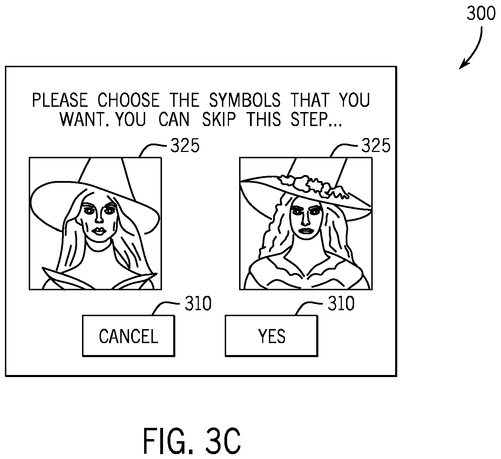

FIG. 3C is a display diagram illustrating the interface 300 provided by the electronic game generation system, in some implementations. The system generates graphic elements 325 based user inputs and/or user attributes, such as selections of game themes and/or graphic styles via the interface 300, and the interface 300 can optionally display the generated graphic elements 325 for selection by a user. As discussed herein, the generated graphic elements 325 may be different from the representative stylistic images of the indications 320 displayed as in FIG. 3B. For example, a user can select a representative stylistic image corresponding a realistic graphic style, and the system can generate and display different graphic elements 325 that are different from the selected representative stylistic image, but composed in the same graphic style as the selected representative stylistic image. In some implementations, this can be achieved using one or more AI models to generate graphic elements in real time based on a selected graphic style. A user can select at least a subset of the graphic elements 325 for inclusion in the generated electronic game. Additionally or alternatively, graphic elements 325 can be retrieved from a database, catalog, or other data store of graphic elements 325, such as based on tags or other metadata, e.g., an image database including specific tags for different attributes that are then matched (e.g., based on weighted scores) with selected attributes to identify images for display. For example, content items including the graphic elements 325 can be identified and retrieved based on a matching algorithm, which can optionally use one or more Al models. In these and other implementations, the matching algorithm can generate a matching score based on user attributes (e.g., inputs received via the user interface 300) and metadata (e.g., tags) for content items, and the matching algorithm can select content items for potential inclusion in an electronic game based on matching scores exceeding a threshold value and/or highest matching scores of a set of matching scores. One or more buttons or icons 310 allow a user to submit or confirm a selection of a graphic element.

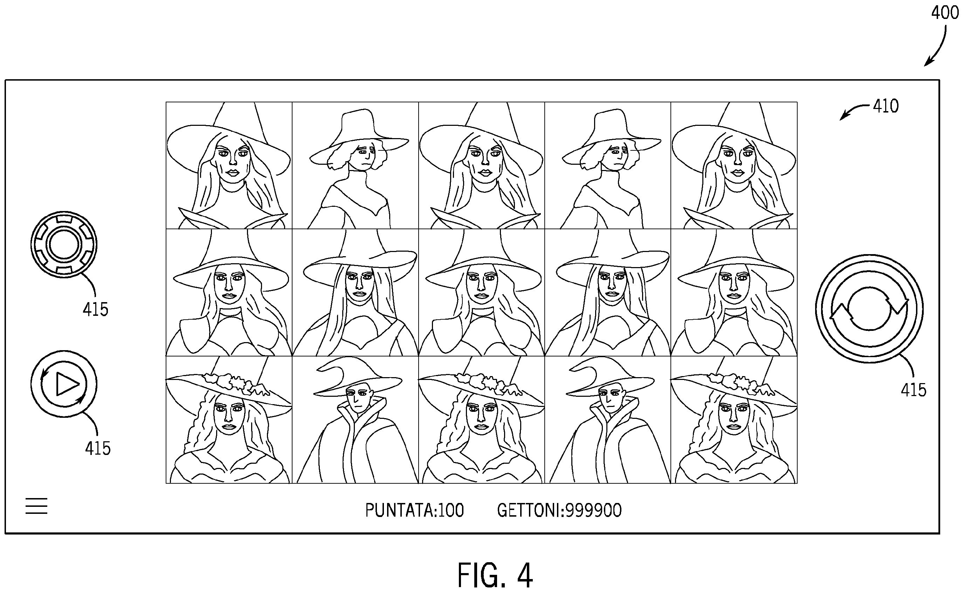

FIG. 4 is a display diagram illustrating an electronic game 400 generated using an electronic game generation system, in some implementations. For example, after receiving inputs via the interface 300, the system can generate the electronic game 400 based on the received inputs. The electronic game 400 can include various elements, such as audio elements, game rules, probabilities of success, or software code. In the example of FIG. 4, the electronic game 400 is a slot machine-like game, but electronic games can be generated according to various game types and/or using any game rules. The electronic game includes a plurality of graphic elements 410 generated by the system, which can comprise at least a subset of graphic elements selected via the interface 300 as illustrated in FIG. 3C. Additionally, the electronic game 400 includes various game controls 415, such as game controls 415 for placing a wager, enabling autoplay, and/or initiating a play or a round of the electronic game 400. In other examples and/or game types, different game controls 415 and/or graphic elements 410 can be used.

In various embodiments, generating the electronic game 400 includes rendering game elements in a way that is unique to user characteristics. For example, game elements retrieved from a catalog can be configured based on a user location or based on hardware capabilities of a user device, as described herein.

As discussed herein, the disclosed system can generate the electronic game 400 in a short amount of time (e.g., seconds or minutes) based on user attributes, such as user preferences, user selections, and/or a user profile, and a functional electronic game 400 can be provided for the user to play immediately. For example, a set of game elements can be selected from a catalog based on weighted scores, which may be based on user preferences, a user profile, user history, or inputs received via the interface 300 of FIGs. 3A-3C. The game elements are retrieved from the catalog and specifically configured for the generated electronic game based on the user attributes. The retrieved game elements are modified based on the user inputs and other user attributes. In an example implementation, the game elements are modified to be output via a user device based on hardware capabilities of the user device. The game elements can include software code, and the game elements are combined to create a playable electronic game in real time. The generated electronic game is then stored locally or on the cloud for use by the user.

In some implementations, the electronic game 400 is generated using predetermined game rules and/or probabilities of success, and customized content items (e.g., graphic elements 410) are generated for inclusion based on user attributes. In these and other implementations, the predetermined game rules can be based on user selections or inputs (e.g., user selections from among a set of predetermined game rules or predetermined game rules configured based on graphic elements or other content items). In other implementations, the game rules are generated by the system, such as based on user attributes or inputs and/or using one or more algorithms or models. For example, rather than using predetermined game rules, the electronic game 400 can be generated using customized game rules that are specific to a user, which may allow for specialized games that are suited to a user's preferences and/or game rules with variable probabilities of success. For example, game rules and/or probabilities of success can be customized to increase the probability of successful results for VIP users and/or in exchange for payment from a user. In another example, game rules can be customized based on previous user interactions, such as to provide game rules that are similar to rules of other games that are preferred by a user.

Although a specific electronic game 400 and user interface 300 are illustrated herein, the system is not limited to the illustrated embodiments. In some implementations, multiple interfaces 300 can be provided, such as different interfaces for configuring and/or selecting different game elements (e.g., a graphic element interface, an audio element interface, a theme interface). In these and other implementations, the multiple interfaces 300 can be provided concurrently and/or in a sequence.

In some implementations, the user interface 300 provides a wizard-like tool via which a user can provide user inputs to configure and/or generate an electronic game. In these and other implementations, the wizard-like tool can generate the depicted interactions of FIGS. 3A-3C and/or other interactions to guide a user through a process for generating an electronic game based on user attributes. In some implementations, the wizard-like tool can be customized based on user attributes, such as for configuring electronic game elements that are most relevant to a user's preferences or other attributes.

In some implementations, a single interface 300 can receive user selections (e.g., as illustrated with reference to the interface 300) and concurrently or subsequently display a representative electronic game 400 or a preview of an electronic game 400, such as to allow a user to see in real time an example or preview of the game that the system will generate in response to the user selections. This allows a user to configure and/or modify the electronic game 400 in real time, as the electronic game 400 is being generated. For example, a preview of the electronic game 400 can be provided, and the user can play the electronic game 400 immediately (e.g., within seconds of completing the process of generating the electronic game 400). The user can then provide feedback regarding the preview of the electronic game 400, such as additional user inputs, which can be used to modify or reconfigure the electronic game 400 based on the provided feedback. Additionally or alternatively, if the user is satisfied with the preview of the electronic game 400, then the user can continue playing the electronic game 400 and/or provide a confirmation to the system to generate the electronic game 400 depicted in the preview.

Although the depicted examples illustrate user attributes and/or inputs received via an interface 300, the system can additionally or alternatively generate an electronic game 400 based on other attributes and/or inputs, such as gesture inputs, inputs from one or more sensors (e.g., cameras, biometric sensors), automatically generated inputs, and so forth. User inputs can be received in various ways, such as by selecting one or more buttons (e.g., hardware or software buttons), receiving textual or voice commands, receiving visual commands, receiving gesture inputs, receiving sensor inputs (e.g., using biometric sensors), and so forth. User inputs can be received, for example, using peripheral devices, such as a mouse, keyboard, or gamepad, and/or using touchscreens.

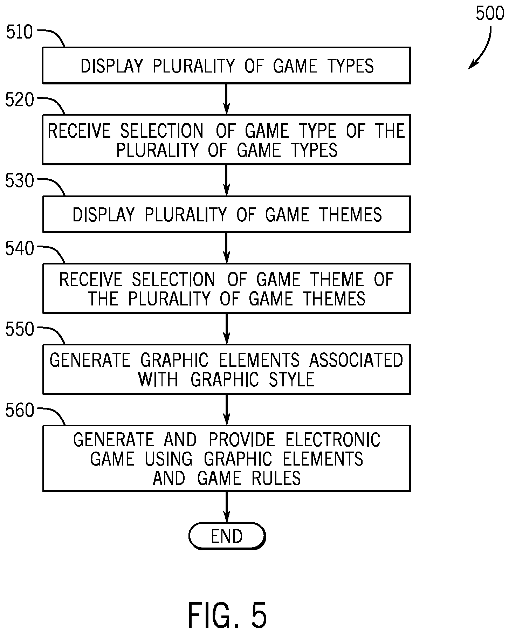

FIG. 5 is a flow diagram illustrating a process 500 to generate a customized electronic game using an electronic game generation system (e.g., system 110 of FIG. 1), in some implementations. The process 500 can be performed using one or more computing devices (e.g., computing device 200 of FIG. 1), and the process 500 can be performed via the interface 300 of FIGS. 3A-C to generate the electronic game 400 of FIG. 4.

The process 500 begins at block 510, where indications of a plurality of game types are displayed. The indications can be displayed via a user interface (e.g., interface 300) displayed on a user device associated with a user (e.g., user device 106 and/or computing device 200). The displayed indications comprise images, text, or other elements to indicate a plurality of game types. Each game type of the plurality of game types corresponds to a set of game rules, such as gameplay, interactions, challenges, levels or rounds, and so forth. Examples of game types include slot machine-like games, bingo-like games, real or simulated card games, pinball-type games, simulated sports games, character-based games, scrolling games, action games, platform games, shooter games, fighting games, and so forth. In some implementations, an electronic game can be associated with multiple game types. For example, an electronic game can be associated with a wagering-type or a non-wagering type game, and the electronic game can further be associated with a game type associated with particular gameplay, such as a fighting game or a platform game. In these and other implementations, operations performed at block 510 can include displaying multiple kinds of indications of game types, such as a first set of indications for wagering or non-wagering games and a second set of indications for a game type specifying gameplay. In some implementations, the system automatically selects or generates a plurality of game types for display, such as based on a user attribute or user profile. In some implementations, game types can be associated with probabilities of success.

The process 500 proceeds to block 520, where a selection of a game type of the plurality of game types is received for inclusion in a generated game. The selection can be received in various ways, such as by receiving a user selection (e.g., via a user interface) of an indication displayed at block 510 or automatically selecting the game type (e.g., based on a user attribute or user profile). In some implementations, multiple game types can be selected. In some implementations, game types are selected and/or recommended based on user attributes, such as user preferences or user history.

The process 500 proceeds to block 530, where indications of a plurality of game themes are displayed (e.g., in a user interface). The game theme of the plurality of game themes corresponds to a conceptual game feature, such as topics, subject matters, or concepts included in or related to a generated game. Examples of game themes include magic, fantasy, animals, fruits, or history. The indications of the game theme can comprise images, text, or other representations of the game theme and/or the conceptual game feature. The displayed indications can be as illustrated in FIG. 3A. In some implementations, the system automatically selects and/or generates a plurality of game themes and/or conceptual game features based on a user attribute or user profile. For example, the system can determine, based on a user profile, that the user has previously played electronic games including a fantasy game theme and recommend a game theme based on this determination. Thematic elements based on a game theme may extend across multiple different interfaces of a generated electronic game, e.g., a welcome screen, a first game play scenario, a second game play scenario, and a conclusion (e.g., winning or losing interface), as well as be integrated into various aspects of the interface, e.g., icons, alerts, notifications, or the like. Game themes can be applied to various content items of a generated electronic game. For example, graphic elements for tiles of a slot machine-like game can be associated with the game theme, and an alert displayed responsive to a winning result can be associated with the same game theme. In some implementations, the system can apply different game themes to different portions or elements of an electronic game, such as a first theme for the graphic elements and a second theme for the alert.

The process 500 proceeds to block 540, where a selection of a game theme of the plurality of game themes displayed at block 530 is received. Selection of the game theme can be generally as described with reference to selection of the game type at block 520. The game theme is selected for inclusion in the generated game.

The process 500 proceeds to block 550, where graphic elements are generated for inclusion in the generated game. The graphic elements can include tiles, symbols, thumbnails, and/or other images for inclusion in a game. Additionally or alternatively, graphic elements can include title cards or sequences, characters, avatars, interactive game features, and so forth. The graphic elements are associated with a graphic style based on one or more user attributes, such as user preferences, user inputs, user profile information, user data, or the like. The graphic elements can further be based on the game type and/or the game theme. For example, the game type may require one or more characters, and the graphic elements can include images used to generate or configure the one or more characters. The graphic elements can be generated in various ways, such as by retrieving and/or combining images from a catalog (e.g., stock images, clip art) or generating images and/or other graphic elements using one or more Al models. In some implementations, the graphic elements are generated in real time. In these and other implementations, the graphic elements can be retrieved from a catalog based on one or more matching algorithms, such as by generating matching scores for the graphic elements and selecting graphic elements for inclusion based on matching scores that exceed a threshold value. The matching scores can be generated based on content metadata (e.g., tags) that match user attributes (e.g., user inputs or user profile data).

In some implementations, the system includes one or more databases and/or catalogs storing gaming content, such as images, videos, text, fonts, alerts, notifications, templates, and so forth, and the stored gaming content can be associated with metadata, such as tags, descriptions, associated electronic games, themes, styles, game types, time stamps, associated users and/or user attributes, and so forth. To generate the graphic elements at block 550, the system can identify relevant gaming content (e.g., using a matching algorithm and/or AI or ML model) in the database or catalog based on the associated metadata and retrieve the relevant gaming content for inclusion in the generated graphic elements. For example, gaming content in a catalog can be selected based on the user inputs received at blocks 520 and 540 and loaded at a user device implementing the process 500 for processing and rendering as part of the electronic gaming being generated.

In an example implementation, metadata associated with the stored gaming content is evaluated based on the user inputs received at blocks 520 and 540 and/or other user attributes, and elements from the stored gaming content are selected based on the evaluation of the metadata. For example, a weighted score can be determined for stored gaming content based on user attributes, and elements from the stored gaming content can be selected based on N number of elements having a highest weighted score or based on a weighted score exceeding a threshold value. In some embodiments, a game type score is determined based on a game type selected at block 520, the game type score indicating a likelihood that a respective element matches the selected game type, and a game theme score is determined based on a game theme selected at block 540, the game theme score indicating a likelihood that a respective element matches the selected game theme. In these and other embodiments, a graphic style score is determined based on a graphic style (e.g., selected by a user or identified based on a user attribute), the graphic style score indicating a likelihood that a respective element matches a desired or preferred graphic style. A weighted score can be determined based on a game type score, a game theme score, and/or a graphic style score, and graphic elements can be selected for inclusion in a game based on the weighted score. The selected graphic elements can be retrieved and configured, rendered, or processed for inclusion in a generated game.

In some implementations, the graphic elements or other content items can be generated using one or more AI models, such as generative AI models. Examples of AI models include ChatGPT, DALL-E, or DALL-E 2 provided by OpenAI of San Francisco, California, United States, or NUWA-Infinity or NUWA-XL provided by Microsoft Corporation of Redmond, Washington, United States. In some implementations, the disclosed system provides, configures, and/or trains one or more AI models, such as customized AI models. A "model," as used herein, can refer to a construct that is trained using training data to make predictions, provide probabilities, and/or generate outputs for new data items, whether or not the new data items were included in the training data. For example, training data for supervised learning can include items with various parameters and an assigned classification. A new data item can have parameters that a model can use to assign a classification to the new data item. As another example, a model can be a probability distribution resulting from the analysis of training data, such as a likelihood of an n-gram occurring in a given language based on an analysis of a large corpus from that language. Examples of models include, without limitation: AI models, ML models, neural networks, support vector machines, decision trees, Parzen windows, Bayes, clustering, reinforcement learning, probability distributions, decision trees, decision tree forests, and others. Models can be configured for various situations, data types, sources, and output formats.

In some implementations, a model of the system can include a neural network with multiple input nodes that receive training datasets. The input nodes can correspond to functions that receive the input and produce results. These results can be provided to one or more levels of intermediate nodes that each produce further results based on a combination of lower-level node results. A weighting factor can be applied to the output of each node before the result is passed to the next layer node. At a final layer, ("the output layer,") one or more nodes can produce a value classifying the input that, once the model is trained, can be used to generate predictions and/or outputs based on inputs (e.g., characteristics of desired graphic elements), and so forth. In some implementations, such neural networks, known as deep neural networks, can have multiple layers of intermediate nodes with different configurations, can be a combination of models that receive different parts of the input and/or input from other parts of the deep neural network, or are convolutions-partially using output from previous iterations of applying the model as further input to produce results for the current input.

A model can be trained with supervised learning. Testing data can then be provided to the model to assess for accuracy. Testing data can be, for example, a portion of the training data (e.g., 10%) held back to use for evaluation of the model. Output from the model can be compared to the desired and/or expected output for the training data and, based on the comparison, the model can be modified, such as by changing weights between nodes of a neural network and/or parameters of the functions used at each node in the neural network (e.g., applying a loss function). Based on the results of the model evaluation, and after applying the described modifications, the model can then be retrained to evaluate new inputs.

In some implementations, the one or more user attributes used to generate the graphic elements include a user-selected graphic style. In these and other implementations, indications of a plurality of graphic styles are displayed. The indications of the graphic styles each comprise a representative stylistic image illustrating a corresponding graphic style. The representative stylistic image may not be included in the generated graphic elements. Instead, the representative stylistic image can comprise a sample, example, or illustration of a graphic style. For example, the representative stylistic images can be as illustrated in FIG. 3B, such as representative or illustrative images for a realistic style, an Anime style, a cartoon style, a RPG style, a Van Gogh style (e.g., appearing similar to a Van Gogh painting), and so forth. A selection of graphic style is received from among the plurality of graphic styles, and the graphic elements are generated based on the selected graphic style.

In some implementations, the generated graphic elements are displayed, and a selection of at least a portion of the generated graphic elements for inclusion in the generated electronic game is received.

In some implementations, a quantity of the generated graphic elements is determined, such as based on the game type and/or the game rules. For example, a slot machine-like game may use a preset number of graphic elements (e.g., symbols).

The process 500 proceeds to block 560, where the electronic game is generated and provided to a user device using the generated graphic elements and the set of game rules corresponding to the selected game type. Generating the electronic game can include generating and/or modifying software code. Once generated, the electronic game can be played immediately, such as by the user and/or by end users to which the user provides the generated electronic game. For example, the process 500 can be performed while a user is logged into an online gaming portal, and the user can generate and begin playing the game in real time. As a further example, the process 500 can be performed using a gaming device (e.g., a slot machine or slot machine-like device), and a user of the gaming device can use the process 500 to generate a new game on the gaming device in real time, such as a game that is customized to the user. Instead of relying on manual identification of content for inclusion in the electronic game, the system can automatically identify and provide relevant content based on user attributes (e.g., analyze content and provide similar content based on similarities or other statistical assessments of the related content). In some implementations, the content is retrieved from a database or catalog. In some implementations, the system generates new content for inclusion in the electronic game.

Generating the electronic game can include rendering or processing the elements generated at block 550 based on various attributes, such as user selections or preferences, weighted scores, hardware capabilities of a device, and so forth. In an example implementation, a predetermined number of game elements are selected in order of highest weighted scores, and the predetermined number of game element are processed and rendered at a user device for inclusion in the generated electronic game. When the electronic game is generated, it can be stored at the user device or on the cloud.

In some implementations, the process 500 includes providing a preview of the electronic game generated at block 550, which can be played immediately on the user device, and receiving user feedback to modify and/or reconfigure the electronic game. In these and other implementations, the electronic game can be modified or regenerated based on the user feedback, such as to replace or modify one or more content items included in the electronic game. In these and other implementations, the modification of the electronic game can be performed in real time.

In some implementations, the process 500 additionally or alternatively includes generating and/or receiving selections of other game elements or content items, such as audio elements, narrative elements, plot elements, text and/or textual elements, and so forth, and the generated and/or selected game elements or content items are included in the generated electronic game.

In some implementations, the process 500 includes modifying at least one game rule in the set of game rules responsive to a user input or based on one or more user attributes. For example, the system can determine that a user prefers particular types of gameplay, and the system can modify game rules based on the user preferences. The game rules can include gameplay, user interactions, probabilities of success, styles of play, levels, rounds, levels of difficulty, and other rules regarding how a game is played. In some implementations, one or more game rules, such as probabilities of success, can be modified for a user (e.g., based on a user attribute).

Although operations of the process 500 are illustrated in a particular order, operations can be performed in a different order, including repeating one or more operations and/or performing one or more operations in parallel. Operations can be added to and/or removed from the process 500 without deviating from the teachings of the present disclosure.

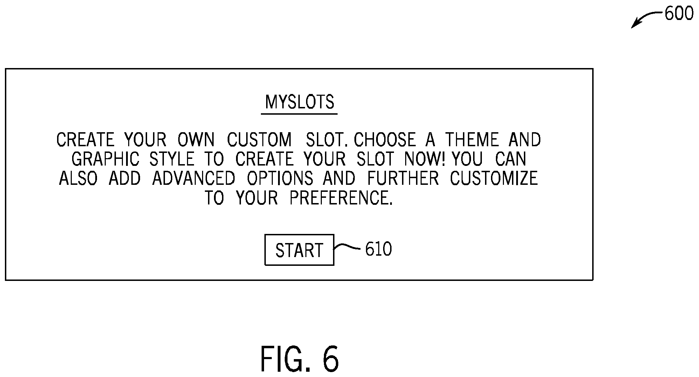

FIG. 6 is a display diagram illustrating an interface 600 provided by an electronic game generation system, in some implementations. The interface 600 includes text, which can include instructions regarding the procedure for generating a game using the game generation system. The interface 600 includes a "start" button 610 that, when selected, starts a process (e.g., 500 of FIG. 5) for generating an electronic game.

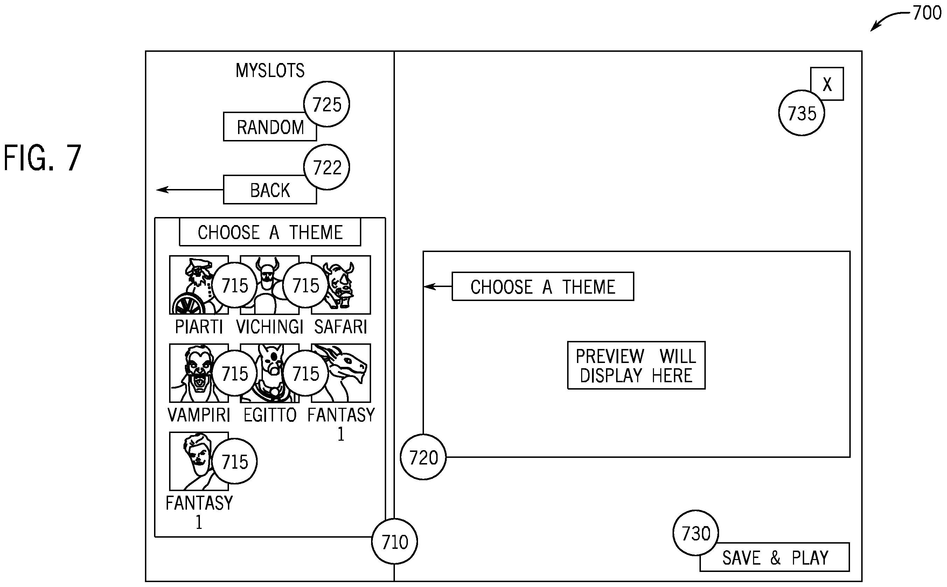

FIG. 7 is a display diagram illustrating an interface 700 provided by an electronic game generation system (e.g., system 110), in some implementations. While depicted separately, features of the interface 700 may be combined with and/or substituted for features of the interface 300 of FIGs. 3A-3C and vice versa. Additionally or alternatively, the interface 700 can be used to implement the process 500 of FIG. 5 and/or to generate the electronic game 400 of FIG. 4.

A user may access the system 110 using a user device (e.g., user device 106 and/or device 200) to generate a new and/or customized electronic game, such as via a website and/or a software application provided by the system 110. Upon accessing the system 110, the user is prompted to provide various inputs to specify desired characteristics of the electronic game, such as characteristics of graphic elements or other content items for a desired electronic game. The interface 700 is displayed responsive to selecting the "start" button 610 of the interface 600 of FIG. 6. The interface 700 includes an input region 710 for receiving inputs for an electronic game and a preview region 720 for displaying a real-time preview of a representative electronic game according to the received inputs.

In the input region 710, a plurality of indications 715 of game themes are displayed. The indications 715 can comprise text and/or images (e.g., thumbnails, clips, or icons) representative of various game themes. The game themes can relate to, for example, topics, subject matters, concepts and/or conceptual elements of an electronic game. In the depicted example, the game themes comprise pirates, Vikings, safari, vampires, Egypt, fantasy 1 and fantasy 2. The indications 715 can be actionable, such as to allow a user to click or touch the indications to select a corresponding game theme.

In various embodiments, no preview of the generated electronic game may be displayed in the preview region 720 until a minimum number of inputs are received (e.g., at least a theme and a style).

A "back" button 722, when selected, causes display of a previous screen or interface (e.g., 600 of FIG. 6). A "random" button 725 causes one or more game elements to be selected at random, such as a game theme indicated by the indications 715, which may be selected using a random number generator. A "save and play" button 730, when selected, causes a generated electronic game to be saved and/or causes the electronic game to be displayed to allow a user to play the electronic game. In some implementations, the "save and play" button 730 is grayed out (e.g., not selectable or actionable) until a minimum number of inputs have been received, such as a game theme and a style. An "exit" button 735, when selected, closes the interface 700.

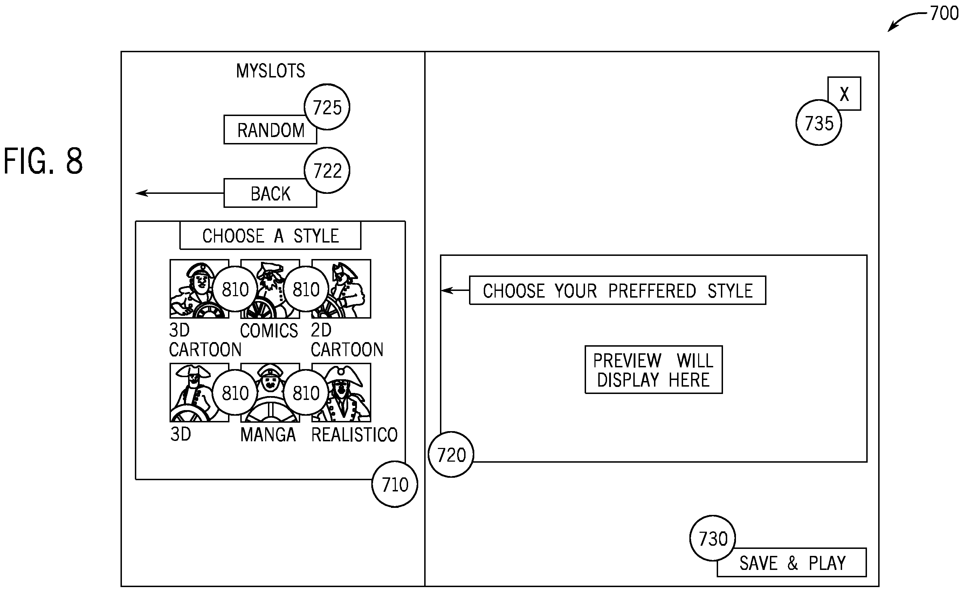

FIG. 8 is a display diagram illustrating a different view of the interface 700 provided by an electronic game generation system, in some implementations. After selection of a game theme, the input region 710 displays a plurality of indications 810 of graphic styles. The indications 810 comprise text and/or images illustrating or representing each graphic style. For example, the indications 810 can be representative stylistic images of a graphic style. A representative stylistic image can be a sample, example, or illustrative image to demonstrate to a user the kind of graphic elements that will be generated according to each graphic style, but the representative stylistic image may not be included in graphic elements that are selected subsequent to selection of a graphic style corresponding to a selected representative stylistic image and/or graphic elements included in a generated electronic game. In the depicted example, the styles include 3D cartoon, comics, 2D cartoon, 3D, Manga, and realistic.

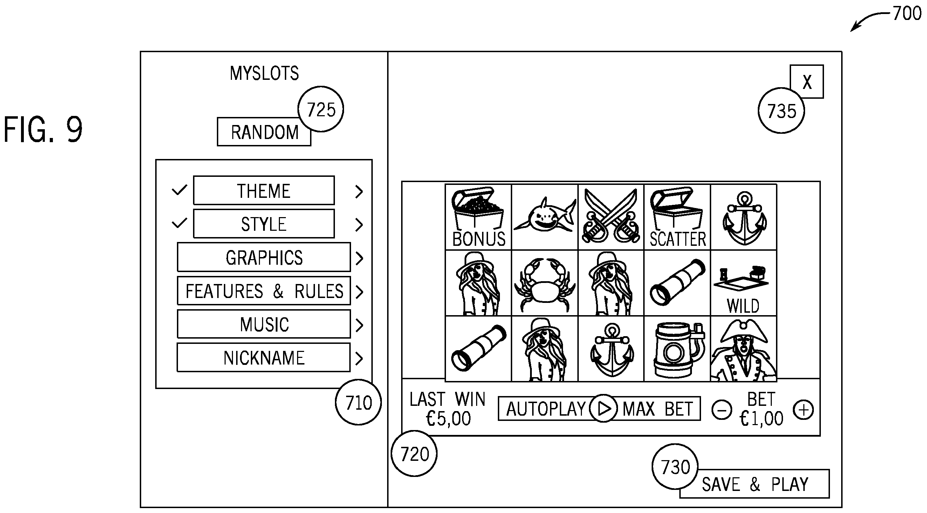

FIG. 9 is a display diagram illustrating a different view of the interface 700 provided by an electronic game generation system, in some implementations. After selection of the game theme and the style, as described with reference to FIGs. 7 and 8, the preview region 720 displays a real-time preview of a generated electronic game based on the received inputs. In some implementations, the real-time preview provides an illustrative view of a generated electronic game before the electronic game is generated, such as by retrieving game elements (e.g., graphic elements) from a catalog of game elements based on received inputs (e.g., a game theme and a style). The real-time preview can be continuously updated in real time as new inputs are received via the input region 710.

The input region 710 displays a menu comprising a plurality of options to navigate to different features of the electronic game generation system. For example, a "theme" option, when selected, causes display of the interface 700 as described with reference to FIG. 7, while the "style" option, when selected, causes display of the interface 700 as described with reference to FIG. 8. Additional menu options include a "graphics" option, a "features and rules" option, a "music" option, and a "nickname" option, each of which cause display of different views of the interface 700, as will be further described herein, to select additional game elements. A checkmark or other indicator can be displayed next to each menu option to indicate that inputs have already been received for the selected option.

As illustrated in FIG. 9, the preview region 720 allows a representative electronic game to be displayed in real time (e.g., in second or less) while an electronic game is being generated using the interface 700. In various embodiments, the preview region 720 displays the representative electronic game only after a minimum number of inputs has been received, such as after receiving a selection of a game theme and a style.

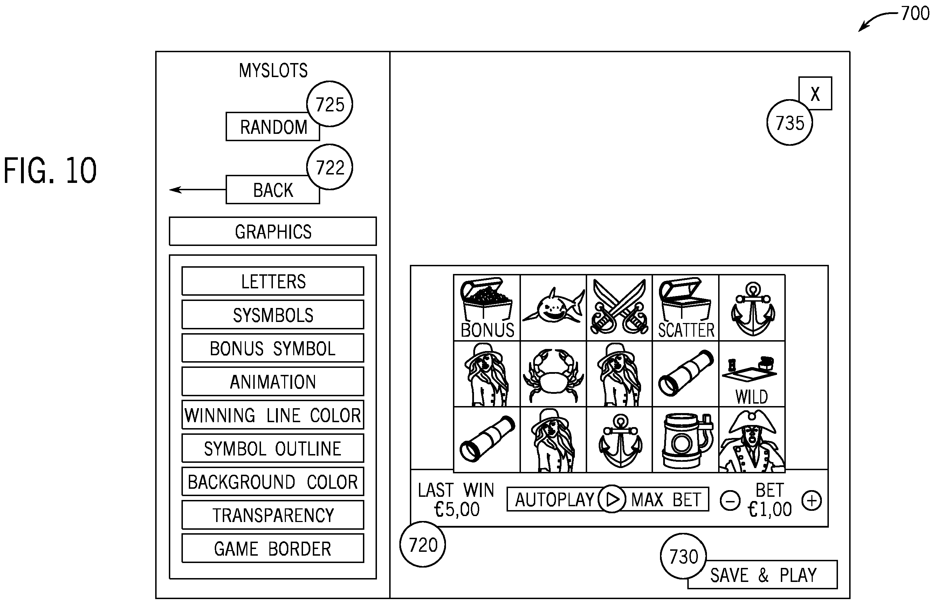

FIG. 10 is a display diagram illustrating a different view of the interface 700 provided by an electronic game generation system, in some implementations. The depicted view is displayed responsive to selecting the "graphics" option via the input region 710, as described with reference to FIG. 9. In the depicted example, the input region 710 displays a plurality of graphics options.

A "letters" option, when selected, allows a user to select various graphic elements comprising letters and/or numbers, such as letters and numbers corresponding to those in a standard deck of playing cards (e.g., A, K, Q, J, 10, etc.). The "letters" option may also allow a user to select various characteristics associated with the graphic elements, such as a color of the letters and numbers (e.g., a single color for all letters and numbers or multiple colors). As characteristics are selected by the user, the preview region 720 automatically updates in real time to display a representative electronic game that includes the selected characteristics. For example, if a user selects an option for red letters, at least some graphic elements displayed in the preview region 720 will be changed to graphic elements comprising red letters.

A "symbols" option, when selected, allows a user to select representative symbols and/or sets of symbols for inclusion in a generated electronic game. The symbols may be based on selected game themes and styles, as described with reference to FIGs. 7 & 8. When the "symbols" option is selected, the input region 710 may display various sets of representative symbols (i.e., graphic elements) that can be selected. In various embodiments, the displayed sets of symbols are not for inclusion in a generated electronic game - rather, they are retrieved from a catalog and are merely representative of symbols to be generated for inclusion in the electronic game.

A "bonus symbol" option, when selected, allows a user to select symbols or representative symbols that are specific to bonus play. For example, bonus symbols (i.e., graphic elements) can be retrieved from a catalog for display, and a user can select a displayed bonus symbol for inclusion in an electronic game.

An "animation" option, when selected, allows a user to select an animation to be applied to one or more graphic elements in a game, such as a flash animation option (e.g., to simulate light flashing on a graphic element), an energy animation option (e.g., to show shaking or other movement of a graphic element), or an explosion animation option (e.g., to simulate explosion of a graphic element).

A "winning line color" option, when selected, allows a user to select a color of a winning line (e.g., a payline) displayed when a winning result is achieved in a generated electronic game.

A "symbol outline" option, when selected, allows a user to select an outline color of at least some graphic elements to be included in a generated electronic game.

A "background color" option, when selected, allows a user to select a background color to be applied to graphic elements included in a generated electronic game.

A "transparency" option, when selected, allows a user to select an amount of transparency of the background of graphic elements included in a generated electronic game. For example, graphic elements can be transparent, partially transparent, or opaque.

A "game border" option, when selected, allows a user to select and/or define a border to be applied to an entire electronic game (i.e., around the entire area defined by the graphic elements of a generated electronic game).

As each of the graphics options are selected by a user via the input region 710, the preview region 720 automatically updates in real time to display a representative electronic game according to the selected graphics options.

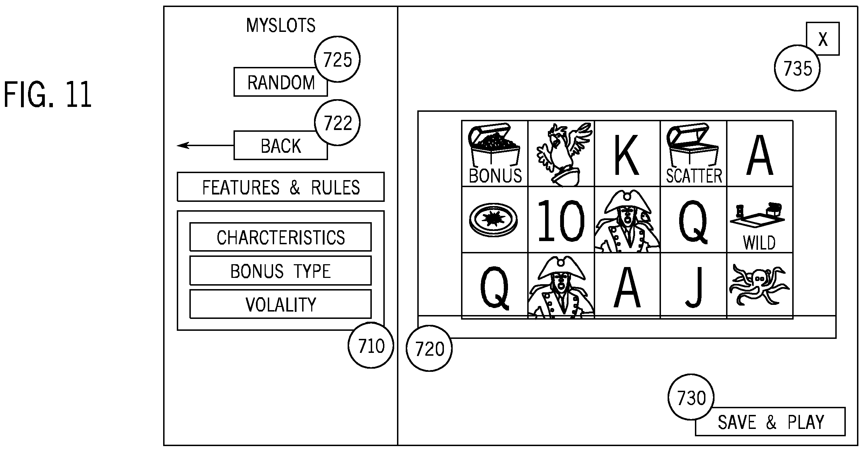

FIG. 11 is a display diagram illustrating a different view of the interface 700 provided by an electronic game generation system, in some implementations. The depicted view is displayed responsive to selecting the "features and rules" option via the input region 710, as described with reference to FIG. 9. The "features and rules" option allows a user to select one or more options for game rules and/or probabilities of success.

A "characteristics" option, when selected, allows a user to select from various characteristics of game rules, such as whether a generated electronic game will follow "scatter," "wild," or "stacked wild" slot machine logic, or other game logic.

A "bonus type" option, when selected, allows a user to select from various types of bonus play for a generated electronic game, such as whether a bonus play includes spinning a wheel, picking a box from a set of boxes, clicking an object associated with a bonus prize, and/or receiving a free spin (e.g., associated with a multiplier). The selected bonus play options define one or more user interactions available when a bonus result is achieved in a generated electronic game.

A "volatility" option, when selected, allows a user to select from various game rules and/or probabilities of success related to frequency and magnitude of winning results in a generated electronic game. Volatility can refer to frequency and/or predictability of winning results, value of winning results, or both. For example, a "low" volatility can be associated with game rules wherein winning results occur relatively frequently and/or regularly, but associated prizes are relatively low - that is, winning results may occur with predictable frequency (e.g., every 10 plays, on average), but associated prizes are modes (e.g., a dollar, five dollars, ten dollars). A "medium" volatility can be associated with game rules wherein winning results occur with moderate frequency (e.g., every 20 plays, every 50 plays) and associated prizes are within a moderate range (e.g., twenty dollars, fifty dollars, one hundred dollars). A "high" volatility can be associated with game rules wherein winning results occur with varying frequencies (e.g., between once every 100 plays and once every 1000 plays) and/or are associated with prizes that vary widely in value (e.g., between one dollar and 1000 dollars).

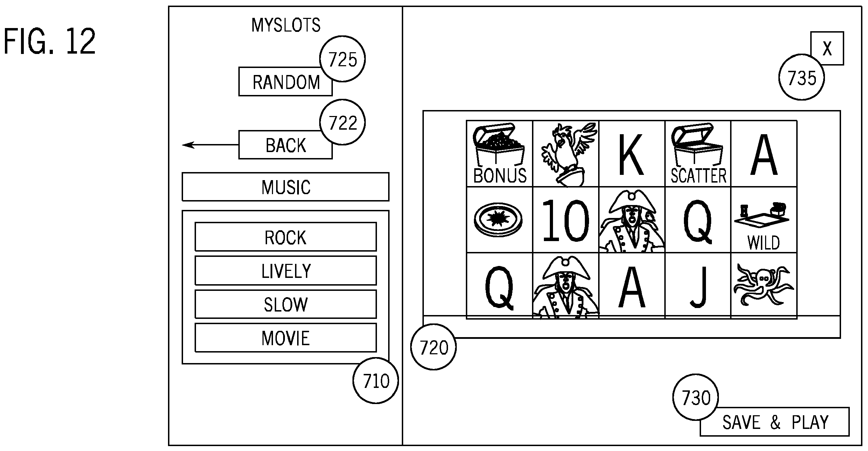

FIG. 12 illustrates a different view of the interface 700 provided by a game generation system, in some implementations. The depicted view is displayed responsive to selecting the "music" option via the input region 710, as described with reference to FIG. 9. The "music" option allows a user to select one or more options for songs and/or styles of music. For example, options for rock music, "lively" music, "slow" music, and/or music associated with one or more movies can be selected. Selecting each music option may cause representative music to be played as part of a preview.

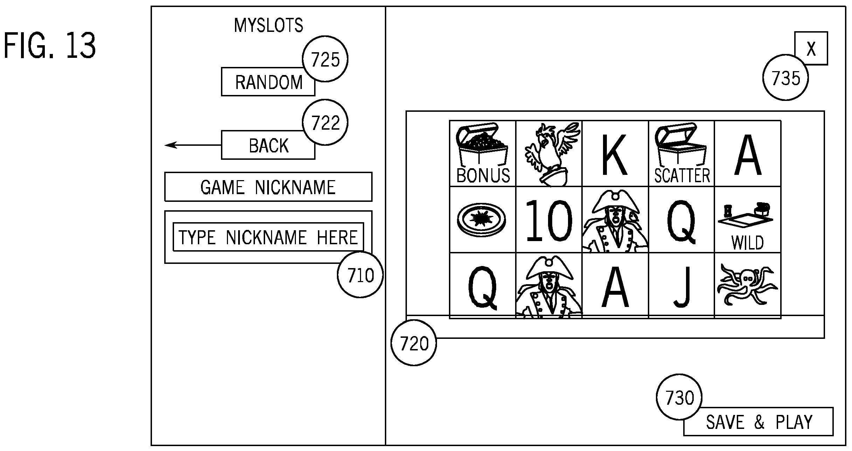

FIG. 13 illustrates a different view of the interface 700 provided by a game generation system, in some implementations. The depicted view is displayed responsive to selecting the "nickname" option via the input region 710, as described with reference to FIG. 9. The "nickname" option allows a user to input a name and/or other identifier for a generated electronic game. For example, the input region 710 displays an input field via which a user can provide a character string for a game identifier.

When a user has finished providing all desired inputs (e.g., via any of the views illustrated with reference to FIGs. 7-13, the user may select the "save and play" button 730, and the system generates and stores the electronic game responsive to the selection. The electronic game is generated to have characteristics defined by the inputs received via the input region 710. The electronic game can be generated in real time (e.g., in seconds or less). The generated electronic game can be displayed immediately for the user to begin playing and/or the generated electronic game can be available via a homepage, portal, or website associated with a user. The generated electronic game may be generally as described with reference to the electronic game 400 of FIG. 4.

The views of the interface 700 described with reference to FIGs. 7-13 can be modified while maintaining a similar functionality, and the views can be displayed in various orders. Additionally, one or more of the views can be optional and/or views can be added to the interface 700.

The disclosed systems and methods enable fast and easy generation of electronic games, such as allowing end users to generate customized games based on their preferences and/or attributes in real time. The disclosed systems and methods increase efficiency and reduce use of resources (e.g., computing resources, human resources) because the disclosed technology improves over existing manual systems for generating electronic games, which typically require the involvement of multiple developers using multiple devices over hundreds of hours to generate a single electronic game. Additionally, the disclosed technology improves user experiences because the systems and methods can generate electronic games that are tailored to user attributes and/or preferences.

The technology described herein can be implemented as logical operations and/or modules in one or more systems. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations can be performed in any order, unless explicitly claimed otherwise or unless a specific order is inherently necessitated by the claim language.

In some implementations, articles of manufacture are provided as computer program products that cause the instantiation of operations on a computer system to implement the procedural operations. One implementation of a computer program product provides a non-transitory computer program storage medium readable by a computer system and encoding a computer program. It should further be understood that the described technology can be employed in special-purpose devices independent of a personal computer.

The above specification, examples and data provide a complete description of the structure and use of example embodiments as defined in the claims. Although various example embodiments are described above, other embodiments using different combinations of elements and structures disclosed herein are contemplated, as other implementations can be determined through ordinary skill based upon the teachings of the present disclosure. It is intended that all matter contained in the above description and shown in the accompanying drawings shall be interpreted as illustrative only of particular embodiments and not limiting. Changes in detail or structure can be made without departing from the basic elements as defined in the following claims.

## Claims

1. A computer-implemented method of generating a customized electronic game, the method comprising:
displaying (510), via a user interface (300) displayed on a user device associated with a user, indications of a plurality of game types, wherein each game type of the plurality of game types corresponds to a set of game rules, and wherein the user interface is configured to generate an electronic game;
receiving (520), via the user interface, a selection of a game type of the plurality of game types for the electronic game;
displaying (530), via the user interface, indications of a plurality of game themes (305), wherein each game theme of the plurality of game themes corresponds to a conceptual game feature;
receiving (540), via the user interface, a selection of a game theme of the plurality of game themes for the electronic game;
generating (550) graphic elements for the electronic game based on the selected game type and the selected game theme, wherein the graphic elements are associated with a graphic style based on at least one user attribute of the user;
generating (560) the electronic game using the generated graphic elements and the set of game rules corresponding to the selected game type; and
providing the generated electronic game to the user device.

2. The method of claim 1, wherein the at least one user attribute comprises selection of the graphic style, the method further comprising:
displaying, via the user interface, indications of a plurality of graphic styles (320), wherein the indications of the graphic styles each comprise a representative stylistic image illustrating a corresponding graphic style, wherein the plurality of graphic styles includes the selected graphic style, and wherein the representative stylistic image is not included in the generated graphic elements; and
receiving, via the user interface, a selection of the selected graphic style.

3. The method of any preceding claim, wherein the at least one user attribute is determined based on a user profile of the user.

4. The method of any preceding claim, further comprising:
selecting for display the plurality of game types or the plurality of game themes based on the at least one user attribute.

5. The method of any preceding claim, wherein the graphic elements are generated using an artificial intelligence model.

6. The method of any preceding claim, wherein at least one of the electronic game or the graphic elements are generated in real time.

7. The method of claim 1, wherein the user device comprises an electronic slot machine.

8. The method of any preceding claim, further comprising:
displaying the generated graphic elements; and
receiving a selection of at least some of the generated graphic elements, wherein the generated electronic game includes the at least some of the generated graphic elements.

9. The method of any preceding claim, wherein generating the graphic elements includes retrieving stored images from an image catalog for inclusion in the graphic elements.

10. The method of any preceding claim, further comprising:
receiving a selection of an audio element for the electronic game, wherein the generated electronic game includes the selected audio element.

11. The method of any preceding claim, further comprising:
concurrently displaying, via the user interface, a representative electronic game while the electronic game is being generated.

12. The method of any preceding claim, wherein the set of game rules is associated with a volatility, wherein the volatility includes a frequency of winning results, a magnitude of winning results, or both.

13. A non-transitory computer-readable medium carrying instructions that, when executed by a computing system, cause the computing system to perform operations comprising:
computing a weighted score associated with a plurality of game elements in a catalog, wherein the weighted score is based on metadata tags associated with the plurality of game elements and one or more user attributes;
selecting a subset of the plurality of game elements based on the weighted score;
retrieving the subset of the plurality of game elements from the catalog;
rendering the retrieved subset of the plurality of game elements for inclusion in an electronic game based at least in part on the weighted score; and
generating the electronic game using the rendered subset of the plurality of game elements.

14. The non-transitory computer-readable medium of claim 13, wherein the operations further comprise:
determining hardware capabilities of a user device, wherein the subset of the plurality of game elements is rendered based at least in part on the determined hardware capabilities.

15. The non-transitory computer-readable medium of claim 13 or 14, wherein the one or more user attributes include a location of a user or a user device.
